# EUROPÄISCHE PATENTSCHRIFT

(11) **EP 1 988 620 B1**
(45) Veröffentlichungstag und Bekanntmachung des Hinweises auf die Patenterteilung: **17.09.2014**
(21) Anmeldenummer: 08160195.7
(22) Anmeldetag: 16.08.2004
(51) Int. Cl.: H02K 5/15

(54) **Reluktanzmotor**
Reluctance motor
Moteur à réluctance

(30) Priorität: 18.08.2003 DE 10337915
(43) Veröffentlichungstag der Anmeldung: 05.11.2008
(62) Teilanmeldung aus: 04766502.1
(73) Patentinhaber: Vorwerk & Co. Interholding GmbH, 42275 Wuppertal (DE)
(72) Erfinder: Caldewey, Uwe, 44229 Dortmund (DE); Lienenlücke, Paul, 45549 Sprockhövel (DE); Theuermann, Volker, 58455 Witten (DE)
(74) Vertreter: Müller, Enno

(56) Entgegenhaltungen:
- WO-A1-99/27633
- DE-U1- 29 518 538
- US-A- 4 306 168
- US-A- 5 852 338

## Beschreibung

Die Erfindung betrifft einen Reluktanzmotor nach den Merkmalen des Oberbegriffs des Anspruches 1.

Reluktanzmotoren der in Rede stehenden Art sind bekannt. Die hierbei eingesetzten Statoren sind entweder als Massivbauteil oder in Form eines Statorblech-Pakets ausgebildet, wobei bei letzterer Variante die einzelnen Statorbleche als Blechstanzteile ausgebildet sind.

Zum Stand der Technik ist weiter auf die GB 2303745 A zu verweisen. Hinsichtlich bei diesem bekannten Reluktanzmotor ausgebildeten Brückenteilen wird eine Verbesserung im Hinblick auf den Zusammenhalt mit den Statorblechen gesucht.

Ausgehend von dem vorgenannten Stand der Technik stellt sich der Erfindung die Aufgabe, einen Reluktanzmotor anzugeben, bei dem ein guter Zusammenhalt insbesondere mit den Brückenteilen erreicht ist.

Diese Aufgabe ist beim Gegenstand des Anspruches 1 gelöst, wobei darauf abgestellt ist, dass die Abschnitte fußrandseitig der Topfwandung radial nach außen abragend, laschenartig ausgebildet sind und mit zugeordneten Randkanten des Statorbleches zumindest partiell übereinstimmen, und dass zur reibschlüssigen Halterung der Brücke auf dem Statorkern die Unterseite der Abschnitte und auch die Unterseite eines zwischen den Abschnitten verlaufenden Kragens riffelplaniert ist.

Zufolge einer zentriergenauen Festlegung der Brücken können Fertigungstoleranzen des Kugellagersitzes für den Rotor ausgeglichen werden. Diesbezüglich ist weiter vorgesehen, dass die Brücke einen mittigen axialen Zylinderabschnitt aufweist, der frei von einem Axialanschlag ein Kugellager aufnimmt. Letzteres wird bevorzugt in den axialen Zylinderabschnitt eingeklebt. Um bei der Verschraubung der Brücken mit dem Stator eine definierte Kraftübertragung über die umlaufende Auflagelinie der Brücke auf dem Stator zu gewährleisten, ist weiter vorgesehen, dass ein Brücken-Außenrand im Querschnitt in einem spitzen Winkel zu einer Horizontalen, das heißt zu einer senkrecht zur Rotordrehachse verlaufenden Ebene verläuft. Als insbesondere herstellungstechnisch vorteilhaft erweist sich eine Ausgestaltung, bei welcher beide Brücken, das heißt die oberseitig des Statorkerns anzuordnende Brücke und die unterseitig des Statorkerns anzuordnende Brücke im Wesentlichen identisch, formgleich ausgebildet sind.

Nachstehend ist die Erfindung anhand der beigefügten Zeichnungen, welche lediglich ein Ausführungsbeispiel darstellen, näher erläutert. Es zeigt:
- Fig. 1: einen erfindungsgemäßen Reluktanzmotor in perspektivischer Zusammenbaudarstellung;
- Fig. 2: den Reluktanzmotor in einer perspektivischen Explosionsdarstellung;
- Fig. 3: den Stator in einer perspektivischen Einzeldarstellung mit einem schematisch dargestellten, einem Verdickungsansatz des Stators zuordbaren Dämpfungselement;

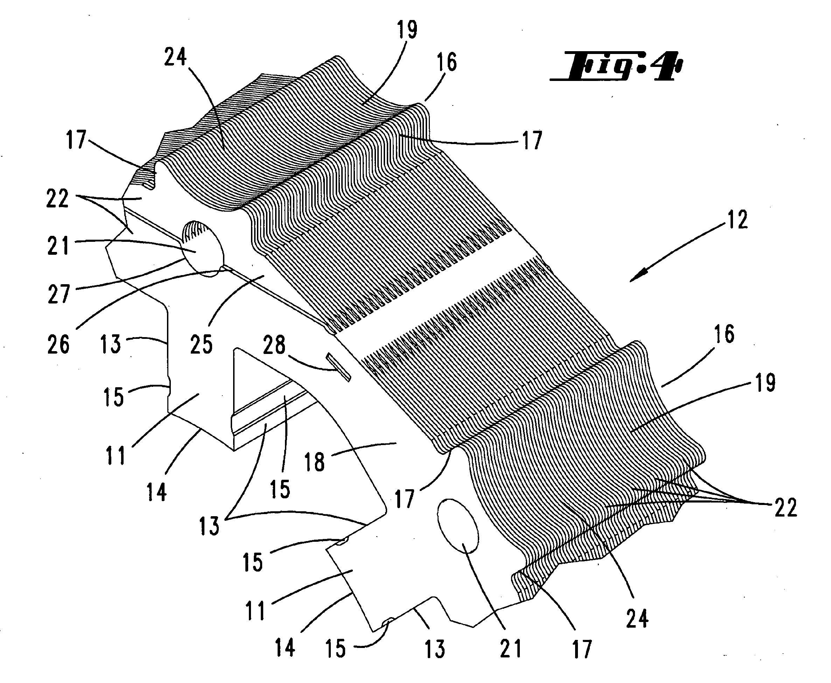

- Fig. 4: eine Herausvergrößerung des Bereichs IV in Fig. 3;
- Fig. 5: die Draufsicht auf ein Statorblech mit in strichpunktierter Linienart angedeuteter Außenkontur des Stators;

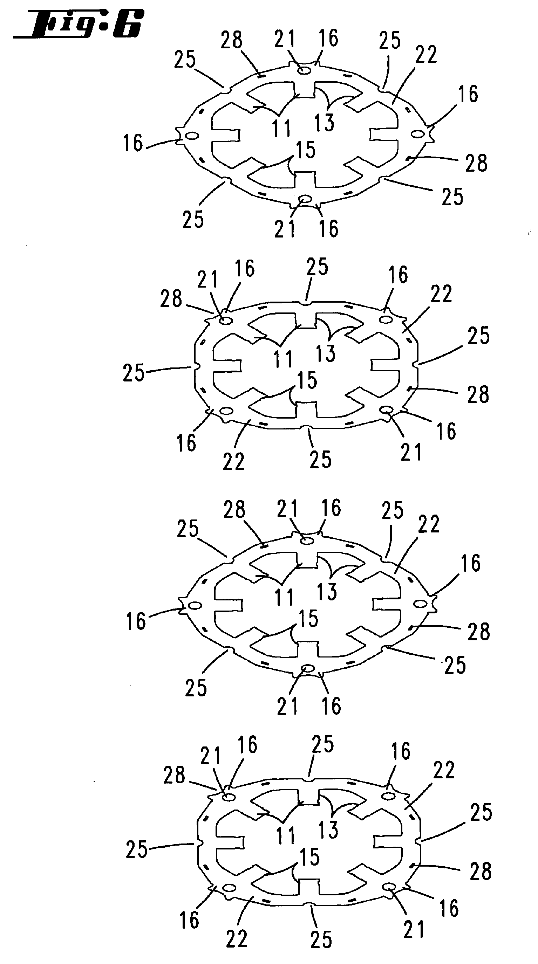

- Fig. 6: in perspektivischer Explosionsdarstellung die Übereinanderlage von vier gleich ausgebildeten, jedoch von Lage zu Lage in Umfangsrichtung versetzten Statorblechen;
- Fig. 7: die Draufsicht auf den durch Übereinanderanordnung der Statorbleche gebildeten Stator;
- Fig. 8: den Schnitt gemäß der Linie VIII - VIII in Fig. 7 mit zugeordneten Dämpfungselementen;
- Fig. 9: den stark vergrößerten Schnitt gemäß der Linie IX - IX in Fig. 7.

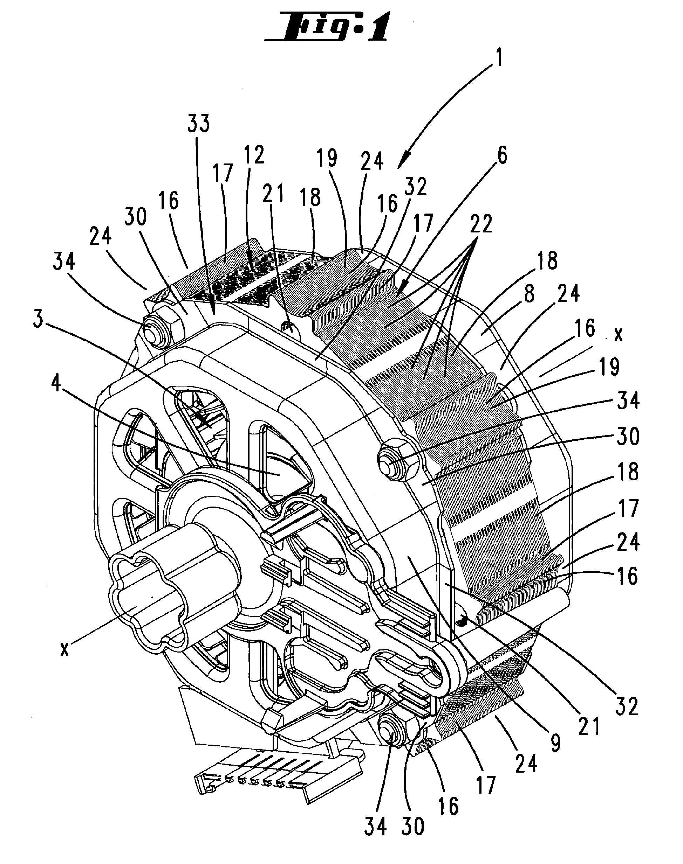

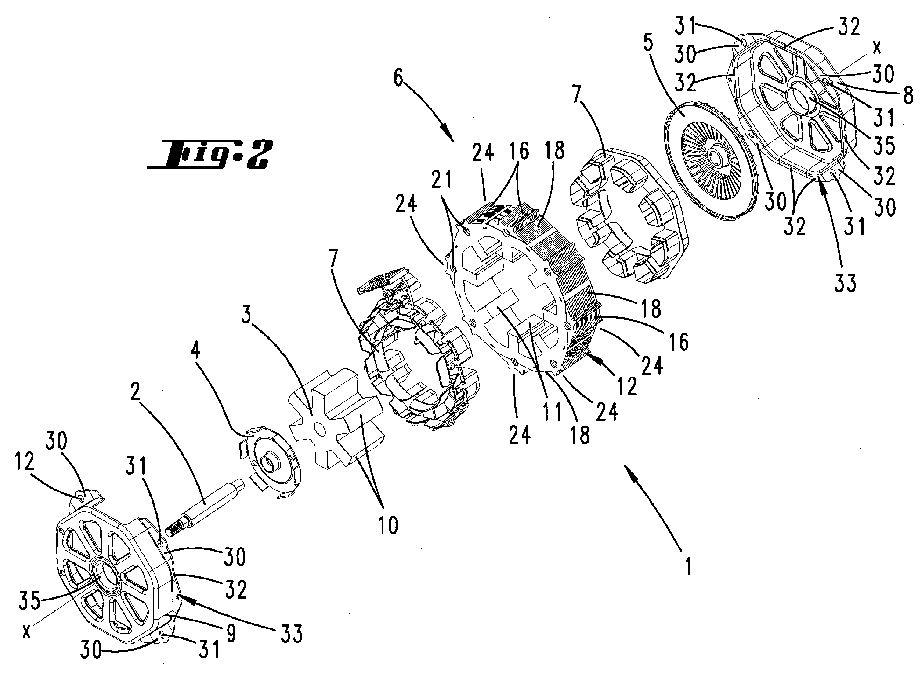

Dargestellt und beschrieben ist zunächst mit Bezug zu den Fig. 1 und 2 ein Reluktanzmotor 1, welcher im Wesentlichen besteht aus einem auf einen Rotorachskörper 2 aufsteckbaren Rotor 3, einer gleichfalls auf den Rotorachskörper 2 aufsteckbaren und drehfest mit dem Rotor 3 verbindbaren Geberscheibe 4 sowie einem auf der der Geberscheibe 4 gegenüberliegenden Seite des Rotors 3 drehfest mit diesem anordbaren Lüfter 5, einem Stator 6 mit einem zweiteiligen Statorabdeckkörper 7 zur Aufnahme von nicht dargestellten Statorspulen und zwei beidseitig des Stators 6 an diesem befestigbare, die Enden des Rotorachskörpers 2 lagernden Brücken 8, 9.

Der dargestellte Reluktanzmotor 1 ist ein sogenannter 8/6 Reluktanzmotor und weist somit einen Rotor 3 mit sechs Rotorsegmenten 10 und einen Stator 6 mit acht, mit nicht näher dargestellten Statorspulen zu versehene Wickelkerne 11 auf.

Der Statorkern 12 des Stators ist im Wesentlichen ringförmig, im Grundriss mehreckig ausgebildet, so in dem dargestellten Ausführungsbeispiel im Wesentlichen in Form eines Achtecks. Jedem zwei benachbarte Eckbereiche verbindenden Kernabschnitt ist ein radial nach innen weisender Wickelkern 11 zugeordnet, welcher bezogen auf die Statorachse x in radialer Richtung parallele Flanken 13 aufweist. Der Abstand der Flanken 13 zueinander definiert die Breite bi des Wickelkerns, welche Breite bi in dem dargestellten Ausführungsbeispiel etwa 11 mm beträgt.

Die radial innere Stirnfläche 14 jedes Wickelkerns 11 ist kreisabschnittförmig mit einem sich auf die Statorachse x beziehenden Radius geformt.

Im Übergangsbereich von den Flanken 13 zur Stirnseite 14 sind parallel zur Statorachse verlaufende nutartige Vertiefungen 15 in den Flanken 13 vorgesehen.

In Radialrichtung zu den Wickelkernen 11 ist der Stator 6 verbreitert, wozu gegenüberliegend zu einem Wickelkern 11 ein sich nach radial außen vorstehender Verdickungsansatz 16 ausgebildet ist. Dieser weist in radialer Richtung parallele Flanken 17 auf, deren Abstand die Breite b₂ definieren. In dem dargestellten Ausführungsbeispiel entspricht die Breite b₂ etwa 16 mm, wobei eine zwischen den Flanken 17 gedachte Mittellinie in Verlängerung in Richtung auf die Statorachse x gleichfalls mittig zwischen den Flanken 13 des zugeordneten Wickelkerns 11 verläuft (Linie u).

Die in radialer Richtung gemessene Dicke d₂ des Statorkerns 12 im Bereich eines Verdickungsansatzes 16 beträgt in dem dargestellten Ausführungsbeispiel etwa 14 mm, wohingegen im Bereich einer zwei derartig radial verbreiterte Bereiche verbindenden Statorkernbrücke 18 eine radiale Dicke d₁ von 10 mm vorliegt. Hieraus ergibt sich ein radialer Vorstand des Verdickungsansatzes 16 von etwa 4 mm gegenüber der im Bereich der Statorkernbrücke 18 ausgebildeten Stator-Außenrandkante.

Wie weiter aus den Darstellungen zu erkennen, weist der Stator 6 acht über den Umfang gleichmäßig verteilt angeordnete Wickelkerne 11 und dementsprechend auch acht gleichmäßig verteilte Verdickungsansätze 16 auf, demzufolge zwei in Umfangsrichtung benachbarte Verdickungsansätze 16 einen Winkel α von 45° einschließen.

Die freien Stirnseiten 19 der Verdickungsansätze 16 sind konkav geformt, wobei in dem dargestellten Ausführungsbeispiel ein Radius von 9 mm vorgesehen ist.

Sowohl die Übergänge von der Stirnseite 19 in die Flanken 17 als auch die Übergänge von den Flanken 17 in den Außenrand der benachbarten Statorkernbrücken 18 sind verrundet bzw. ausgekehlt.

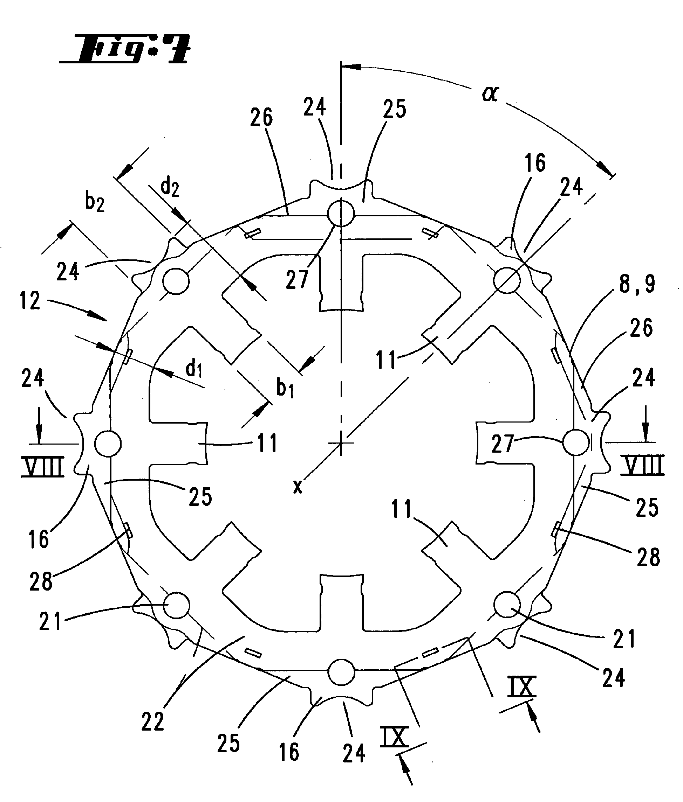

Mit Bezug auf die in Fig. 7 gezeigte Grundrissdarstellung des Stators 6 ist zu erkennen, dass der Außenrand 20 im Bereich der zwischen zwei Wickelkernen sich erstreckenden Statorkernbrücken 18 rechtwinklig zu einer gedachten, sich auf die Statorachse x beziehenden Radiuslinie verlaufen, wobei weiter eine mittig die Außenrandlinie einer Statorkernbrücke 18 schneidende Radiuslinie statorkerninnenwandig einen Eckbereich des Innen-Acht-Ecks des Stators 6 durchsetzt.

Jedem Verdickungsansatz 16 und somit jedem Wickelkern 11 zugeordnet ist in dem Stator 6 eine parallel zur Statorachse x ausgerichtete Durchgangsbohrung 21 vorgesehen, deren Achse auf der mittig den Wickelkern 11 und dem Verdickungsansatz 16 durchsetzenden Linie u ausgerichtet ist. Weiter ist die Durchgangsbohrung 21 fußseitig des Verdickungsansatzes 16 angeordnet. Der Durchmesser einer jeden Durchgangsbohrung 21 beträgt in dem dargestellten Ausführungsbeispiel ca. 6,5 mm. Entsprechend der Anzahl der Verdickungsansätze 16 bzw. der Wickelkerne 11 sind acht über den Umfang gleichmäßig verteilte Durchgangsbohrungen 21 vorgesehen.

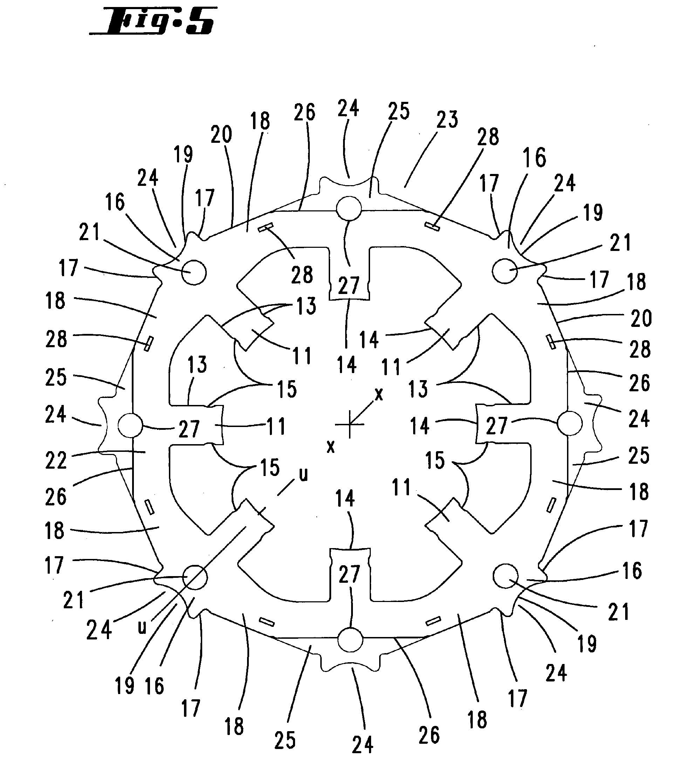

Der Stator 6 ist aus übereinandergelegten, untereinander gleich ausgebildeten Statorblechen 22 zusammengesetzt. Ein solches Statorblech 22 ist in Fig. 5 in einer Einzeldarstellung gezeigt. Dieses Statorblech 22 ist aus einem Blech gestanzt und weist bevorzugt eine Dicke von ca. 0,5 mm auf.

Wie insbesondere aus der Einzeldarstellung in Fig. 5 zu erkennen, entspricht die Außenkontur eines Statorbleches 22 nicht der Fig. 5 in strichpunktierter Linienart wiedergegebenen Außenkontur 23 des aus den übereinander anzuordnenden Statorblechen 22 gebildeten Stators 6. Die nachfolgend weiter als Ecken 24 bezeichneten Verdickungsansätze 16 sind in einem Statorblech 22 nicht alle ausgebildet. Vielmehr weist das Statorblech 22 umfangsmäßig abwechselnd eine ausgefüllte Ecke 24 zur Bildung eines Verdickungsansatzes 16 und an der in Umfangsrichtung folgenden, beim fertigen Stator 6 gleichfalls einen Verdickungsansatz 16 ausformenden Ecke 24 einen Fehlbereich 25 auf. Demnach ist in dieser weiteren Ecke 24 der Verdickungsansatz 16 unberücksichtigt. Vielmehr ist in diesem Bereich eine senkrecht zur mittig der Flanken 13 des zugeordneten Wickelkerns 11 verlaufenden Linie u ausgerichtete Eckbereichs-Randkante 26 vorgesehen, welche beiderends in die Außenränder 20 der benachbarten Statorkernbrücken 18 übergehen. Im Schnittbereich der Mittellinie u und der Eckbereich-Außenrandkante 26 ist ein halbkreisförmiger Ausbruch 27, angepasst und ausgerichtet an die bereits erwähnten Durchgangsbohrungen 21 ausgebildet.

Entsprechend der zuvor beschriebenen Anordnungen liegen bezogen auf ein Statorblech 22 vier umfangsmäßig gleichmäßig verteilt angeordnete Ecken 24 mit Verdickungsansätzen 16 vor, zwischen welchen Verdickungsansatz-Ecken Ecken 24 mit Fehlbereichen 25 platziert sind.

Um die gewünschte Grundfläche des Statorkerns 12 - wie in Fig. 7 dargestellt - zu erhalten, werden die Statorbleche von Lage zu Lage in Umfangsrichtung um eine Ecke 24 versetzt angeordnet, so dass einem Fehlbereich 25 eines unteren Statorblechs 22 eine Ecke 24 mit einem Verdickungsansatz 16 zugeordnet und entsprechend einer Ecke 24 eines Verdickungsansatzes 16 des unteren Statorbleches 22 ein Fehlbereich 25 des oberen Statorblechs 22 zugeordnet ist (vgl. Fig. 7). Zufolge dieser Anordnung ist bei konsequenter zyklischen Lagevertauschung der übereinander angeordneten Statorbleche 22 ein umfangsmäßig und in der Grundfläche gleichmäßiger Statorkern 12 geschaffen.

Durch die versetzte Anordnung der übereinanderliegenden Statorbleche 22 stellen sich insbesondere im Bereich der Verdickungsansätze 16 aber auch in benachbarten Bereichen der Statorkernbrücken 18 kühlrippenartige Blechzungenabschnitte ein, welche von einem Statorblech 22 gebildet sind und ober- sowie unterseitig durch die zugeordneten Fehlbereiche 25 freigestellt sind. Zufolge dieser Ausgestaltung ist bei Erhöhung der Stabilität des Statorkerns 12 zugleich eine verbesserte Kühlung desselben erreicht.

Die übereinander anzuordnenden Statorbleche 22 weisen zur Verklebung untereinander einseitig eine Backlackschicht auf.

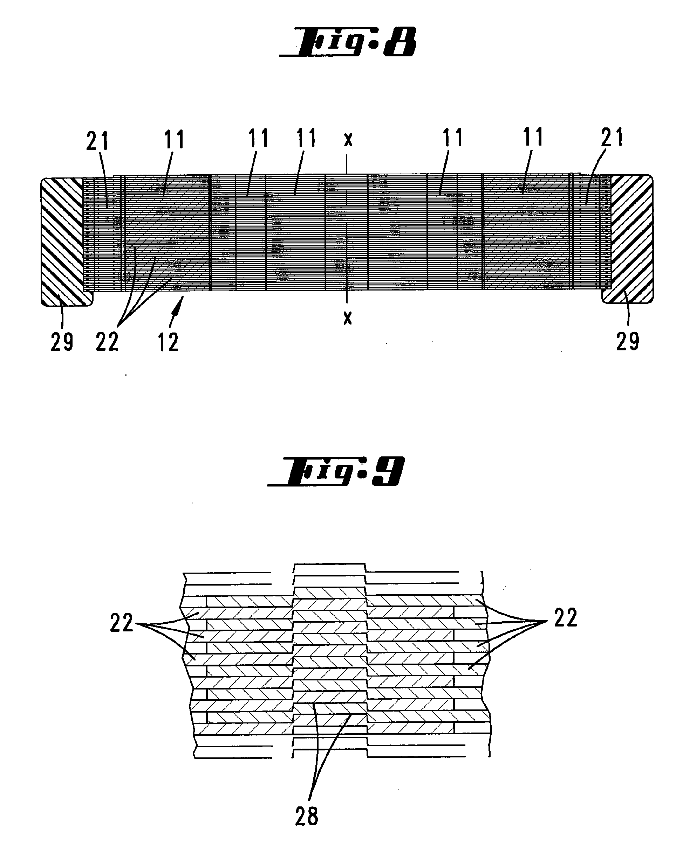

Zur drehfesten Anordnung der Statorbleche 22 zueinander und darüber hinaus auch zur eindeutigen Zuordnung zueinander sind die Statorbleche 22 stanzpaketiert, wozu im Bereich der Statorkernbrücken 18 jeweils eine Einsenkung 28 vorgenommen ist. Die hierdurch auf der gegenüberliegenden Seite des Statorblechs 22 geschaffene Wulst liegt in der Einsenkung 28 des darunter befindlichen Statorblechs 22 ein (vgl. Fig. 9).

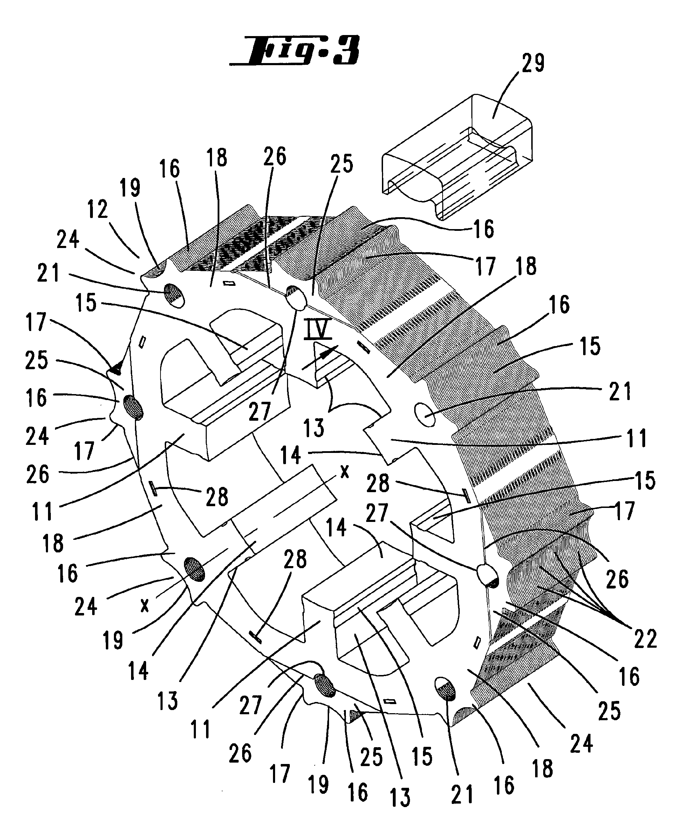

Die ausgeformten Verdickungsansätze 16 dienen des Weiteren zur Aufnahme von aus einem Weichkunststoff bestehenden Dämpfungselementen 29. Ein solches Dämpfungselement 29 ist in der Fig. 3 schematisch dargestellt. Dieses ist schuhartig ausgebildet mit einem Öffnungsquerschnitt, welchem der Querschnittskontur eines Verdickungsansatzes 16 in etwa entspricht. Das Dämpfungselement 29 wird einseitig, parallel zur Statorachse x ausgerichtet von der Ober- oder Unterseite des Statorkerns 12 auf den Verdickungsansatz 16 aufgeschoben. Bevorzugt werden alle acht Verdickungsansätze 16 mit einem solchen Dämpfungselement 29 versehen, über welche eine Lagerung des Stators 6 in einer nicht dargestellten Motoraufnahme erreicht ist.

Die ober- und unterseitig des Statorkerns angeordneten Brücken 8 und 9 sind im Wesentlichen topfartig mit einem der Innenrandkontur des Statorkerns 12 angepassten achteckigen Grundriss, wobei fußseitig der Topfwandung radial nach außen abragende, über den Umfang symmetrisch verteilte Abschnitte 30 angeformt sind. Diese laschenartigen Abschnitte 30 dienen zur Festlegung der Brücke 8 bzw. 9 an dem Statorkern 12.

Des Weiteren sind die Abschnitte 30 grundrissmäßig so ausgebildet, dass diese mit zugeordneten Randkanten des Statorkerns 12 zumindest partiell übereinstimmend verlaufen, so weiter insbesondere mit der Randkante des obersten, der Brücke 8 bzw. 9 direkt zugeordneten Statorblechs 22.

Weiter weisen die Abschnitte 30 eine zentrale Bohrung 31 auf, welche durchmesserangepasst sind an die Durchgangsbohrungen 21 des Statorkerns 12.

Zur reibschlüssigen Halterung der Brücke 8 bzw. 9 auf dem Statorkern 12 ist die Unterseite der Abschnitte 30 und weiter auch die Unterseite eines zwischen den Abschnitten 30 verlaufenden Kragens 32 riffelplaniert.

Zudem ist der durch die Abschnitte 30 und die zwischen diesen angeordneten Kragen 32 gebildete Brücken-Außenrand 33 im Querschnitt gepfeilt, so dass dieser Außenrand 33 im Querschnitt in einem spitzen Winkel zu der zugeordneten Oberfläche des Statorkerns 12 verläuft. Der Brücken-Außenrand 33 schert demnach nach radial außen von der zugeordneten Oberfläche des Statorkerns 12 ab.

Zur Festlegung der Brücken 8 und 9 sowie zur kraftschlüssigen Verbindung der Statorbleche 22 untereinander werden durch die vier gleichmäßig über den Umfang verteilten Abschnitte 30 der Brücken 8 und 9 sowie durch die zugeordneten vier Durchgangsbohrungen 21 des Statorkerns 12 Spannschrauben 34 geführt, deren Durchmesser geringer bemessen ist als der Durchmesser der Durchgangsbohrungen 21 bzw. der Bohrungen 31 in den Abschnitten 30. So ist durch das gegebene Spiel eine genaue Zentrierung der Brücken 8 und 9 zum Statorkern 12 ermöglicht.

Durch die leicht gepfeilt nach oben verlaufenden Abschnitte 30 der Brücken 8 und 9 ist im Zuge der Verspannung mittels der Spannschrauben 34 die Kraftübertragung über die innere Fußlinie der topfartigen Brücke 8 bzw. 9 erreicht.

Zudem weist jede Brücke 8, 9 einen mittigen axialen Zylinderabschnitt 35 auf, welcher frei von einem Axialanschlag ein Kugellager zur Lagerung des Rotorachskörpers 2 aufnimmt. Das nicht näher dargestellte Kugellager ist in den Zylinderabschnitt 35 eingeklebt.

## Patentansprüche

1. Reluktanzmotor (1) mit einem Rotor (3) und einem Stator (6), wobei ein Statorkern (12) Wickelkerne (11) aufweist und aus übereinander-gelegten Statorblechen (22) zusammengesetzt ist, wobei weiter ober- bzw. unterseitig des Statorkerns (12) eine Brücke (8, 9) angeordnet ist und die topfartig ausgebildete Brücke (8, 9) über den Umfang verteilt Abschnitte (30) aufweist, an welchen die Brücke (8, 9) mit einer Randkante des Statorkerns (12) übereinstimmend verläuft, **dadurch gekennzeichnet, dass** die Abschnitte (3) fußrandseitig der Topfwandung radial nach außen abragend, laschenartig ausgebildet sind und mit zugeordneten Randkanten des Statorbleches (22) zumindest partiell übereinstimmen, und dass zur reibschlüssigen Halterung der Brücke (8,9) auf dem Statorkern (12) die Unterseite der Abschnitte (30) und auch die Unterseite eines zwischen den Abschnitten (30) verlaufenden Kragens (32) riffelplaniert ist.

2. Reluktanzmotor nach Anspruch 1, **dadurch gekennzeichnet, dass** die Brücke (8, 9) reibschlüssig mit dem Statorkern (12) verbunden ist.

3. Reluktanzmotor nach Anspruch 2, **dadurch gekennzeichnet, dass** die Brücke (8, 9) einen mittigen axialen Zylinderabschnitt (35) aufweist, der frei von einem Axialanschlag ein Kugellager aufnimmt.

4. Reluktanzmotor nach einem der Ansprüche 1 bis 3, **dadurch gekennzeichnet, dass** ein Brücken-Außenrand (33) im Querschnitt in einem spitzen Winkel zu einer Horizontalen verläuft.

## Claims

1. Reluctance motor (1) comprising a rotor (3) and a stator (6), a stator core (12) comprising wound cores (11) and being composed of superimposed stator sheets (22), a bridge (8, 9) additionally being arranged on the upper side or underside of the stator core (12), and the pot-shaped bridge (8, 9) comprising portions (30) distributed over the periphery thereof, on which portions the bridge (8, 9) extends coinciding with a lateral edge of the stator core (12), **characterised in that** the portions (3) are configured to project radially outwardly on the foot edge of the wall of the pot in the manner of tabs , and coincide at least in part with associated lateral edges of the stator sheet (22), and **in that** in order to hold the bridge (8, 9) on the stator core (12) in a frictionally engaged manner, the underside of the portions (30) and also the underside of a collar (32) extending between the portions (30) are corrugated.

2. Reluctance motor according to claim 1, **characterised in that** the bridge (8, 9) is connected to the stator core (12) in a frictionally engaged manner.

3. Reluctance motor according to claim 2, **characterised in that** the bridge (8, 9) has a central axial cylinder portion (35) which receives a ball bearing without an axial stop.

4. Reluctance motor according to any of claims 1 to 3, **characterised in that** a bridge outer edge (33) extends at an acute angle to a horizontal line in cross section.

## Revendications

1. Moteur à réluctance (1) avec un rotor (3) et un stator (6), pour lequel un noyau de stator (12) présente des noyaux d'enroulement (11) et est formé de tôles de stator (22) allongées les unes sur les autres, pour lequel en outre un pont (8, 9) est agencé sur le dessus respectivement sur le dessous du noyau de stator (12), et le pont formé en forme de coupelle (8, 9) présente des sections (30) réparties sur la circonférence, sur lesquelles le pont (8, 9) s'étend en se conformant avec un bord périphérique du noyau de stator (12), **caractérisé en ce que** les sections (3) sont formées, du côté du bord de pied de la paroi de la coupelle, en saillie radialement vers l'extérieur, en forme de patte et se conformer au moins partiellement avec des bords périphériques de la tôle de stator (22), et **en ce que**, pour le maintien par friction du pont ( 8,9 ) sur le noyau de stator ( 12), le dessous des sections (30) et également le dessous d'un collet (32) s'étendant entre des sections (30) est strié.

2. Moteur à réluctance selon la revendication 1, **caractérisé en ce que** le pont (8, 9) est relié par frottement avec le noyau de stator (12).

3. Moteur à réluctance selon la revendication 2, **caractérisé en ce que** le pont (8, 9) présente une section centrale cylindrique axiale (35) qui accueille un roulement à billes libre de butée axiale.

4. Moteur à réluctance selon l'une quelconque des revendications 1 à 3, **caractérisé en ce que** le bord extérieur d'un pont (33) s'étendant en coupe transversale selon un angle aigu par rapport à une horizontale.
